# EUROPÄISCHE PATENTSCHRIFT

(11) **EP 3 530 389 B1**
(45) Veröffentlichungstag und Bekanntmachung des Hinweises auf die Patenterteilung: **03.08.2022**
(21) Anmeldenummer: 18157831.1
(22) Anmeldetag: 21.02.2018
(51) Int. Cl.: B23C 5/10

(54) **FRÄSWERKZEUG**
MILLING TOOL
FRAISEUSE

(43) Veröffentlichungstag der Anmeldung: 28.08.2019
(73) Patentinhaber: CERATIZIT Balzheim GmbH & Co. KG, 88481 Balzheim (DE)
(72) Erfinder: Schmid, Michael, 88481 Balzheim (DE); Sonntag, Daniel, 88481 Balzheim (DE); Brügmann, Felix, 21073 Hamburg (DE); Hintze, Wolfgang, 21077 Hamburg (DE)
(74) Vertreter: Ciesla, Dirk

(56) Entgegenhaltungen:
- DE-A1-102014 207 502
- DE-B3-102016 006 995
- DE-U1-202015 106 056
- JP-A- H06 246 525
- US-A1- 2005 123 363
- US-A1- 2015 147 127
- US-A1- 2017 216 936

## Beschreibung

Die vorliegende Erfindung betrifft ein Fräswerkzeug mit den Merkmalen des Oberbegriffs von Anspruch 1 sowie ein Verfahren zur Herstellung.

Fräswerkzeuge mit rechts- und linksweisenden Spiralnuten sind insbesondere für die Bearbeitung von Faserverbundwerkstoffen bekannt.

In der Regel ist an einem schaftnahen Bereich ein Abschnitt mit linksweisenden Spiralnuten vorgesehen, an dem bei einer Rechtsdrehung des Werkzeugs wirkende Schneiden ausgebildet sind. Weiters findet man an einem stirnnahen Bereich einen Abschnitt mit rechtsweisenden Spiralnuten, an welchem bei einer Rechtsdrehung des Werkzeugs wirkende Schneiden ausgebildet sind.

Durch das Zusammenwirken von solcherart drückenden und ziehenden Schneiden wird einer Delamination des Werkstücks entgegengewirkt.

Dieses Prinzip ist etwa in der JP H06 246525 A, die ein Fräswerkzeug gemäß dem Oberbegriff des Anspruchs 1 offenbart, gezeigt. Ein Nachteil solcher sogenannter Kompressionsfräser sind hohe Bearbeitungskräfte durch die kontinuierlichen Schneiden.

Ferner gibt es Vorschläge, bei Werkzeugen für die Bearbeitung von Faserverbundwerkstoffen die Schneiden nicht kontinuierlich auszubilden, sondern in Form einzelner spitzer Zähne. Ein Vorschlag für ein solches Werkzeug ist der US7090442 zu entnehmen.

Nachteil solcher als "Router" bekannten Werkzeuge ist ein hackender Schnitt. Aufgabe der vorliegenden Erfindung ist es ein verbessertes Fräswerkzeug sowie ein Verfahren zur Herstellung anzugeben.

Die Aufgabe wird gelöst durch ein Fräswerkzeug mit den Merkmalen von Anspruch 1 bzw. durch ein Verfahren mit den Merkmalen von Anspruch 20. Bevorzugte Ausführungsformen sind in den abhängigen Ansprüchen angegeben. Das erfindungsgemäße Fräswerkzeug ist insbesondere zur Bearbeitung von Faserverbundwerkstoffen geeignet.

Das erfindungsgemäße Fräswerkzeug weist auf:
eine im Wesentlichen gerade kreiszylindrische Grundform mit einer Längsachse, welche eine axiale Richtung festlegt, entlang welcher Längsachse wenigstens ein Schneidenabschnitt und ein Schaftabschnitt sowie ein Stirnbereich ausgebildet ist, wobei das Fräswerkzeug rechtsweisende Spiralnuten und linksweisende Spiralnuten aufweist, und wobei zwischen den sich kreuzenden Spiralnuten diskrete Schneidelemente ausgebildet sind, an welchen Schneidelementen eine oder mehrere Schneiden ausgebildet sind, wobei der Schneidenabschnitt wenigstens aufweist:
- einen ersten axialen Schneidenbereich, der an den Schaftabschnitt angrenzt, wobei an den diskreten Schneidelementen in dem ersten axialen Schneidenbereich überwiegend Schneiden mit einem - bei Gebrauch des Fräswerkzeugs in einem bestimmungsgemäßen Drehsinn - drückendem Schnitt ausgebildet sind,
- weiters einen zweiten axialen Schneidenbereich, der an den Stirnbereich angrenzt und in welchem an den diskreten Schneidelementen überwiegend Schneiden mit einem - bei Gebrauch des Fräswerkzeugs in einem bestimmungsgemäßen Drehsinn - ziehendem Schnitt ausgebildet sind,
- weiters einen Übergangsbereich, der bezüglich der axialen Richtung zwischen dem ersten und dem zweiten Schneidenbereich ausgebildet ist, an welchem Übergangsbereich sowohl Schneiden mit vorwiegend ziehendem Schnitt als auch Schneiden mit vorwiegend drückendem Schnitt ausgebildet sind.

Die beim erfindungsgemäßen Fräswerkzeug auftretenden Bearbeitungskräfte sind gering. Mit dem Fräswerkzeug werden hohe Oberflächengüten und insbesondere hohe Kantenqualitäten bei der Bearbeitung von Faserverbundwerkstoffen erzielt.

Der Schneidenabschnitt weist sich kreuzende Spiralnuten auf. Eine rechtsweisende Spiralnut wird dabei als Spiralnut mit positivem Drallwinkel bezeichnet, eine linksweisende Spiralnut wird dabei auch als Spiralnut mit negativem Drallwinkel bezeichnet. Das Fräswerkzeug wird in der vorliegenden Anmeldung für einen rechtsdrehenden Gebrauch diskutiert. Die Erfindung ist freilich auch für linksdrehende Werkzeuge anwendbar.

Zwischen den sich kreuzenden Spiralnuten sind diskrete Schneidelemente ausgebildet. Am Schneidenabschnitt liegen also im Wesentlichen keine kontinuierlichen Schneiden vor; vielmehr sind die Schneiden an zahnförmigen radialen Erhebungen am Fräswerkzeug, den diskreten Schneidelementen, ausgebildet.

Die diskreten Schneidelemente ("Zähne") können eine oder mehrere Schneiden (Schneidkanten) tragen. Eine Kante eines diskreten Schneidelementes wird dann als Schneide bezeichnet, wenn an die betreffende Kante wenigstens ein definierter Freiwinkel aufgebracht ist.

Das Fräswerkzeug besitzt eine im Wesentlichen zylindrische Grundform mit einer Längsachse, welche eine axiale Richtung festlegt, entlang welcher Längsachse wenigstens ein Schneidenabschnitt und ein Schaftabschnitt sowie ein Stirnbereich ausgebildet ist. Der Schaftabschnitt dient zur Einspannung des Fräswerkzeugs in einer Bearbeitungsmaschine.

Der Schneidenabschnitt weist entlang seiner axialen Erstreckung wenigstens drei Bereiche auf:
Einen ersten axialen Schneidenbereich, der an den Schaftabschnitt angrenzt, wobei an den diskreten Schneidelementen in dem ersten axialen Schneidenbereich überwiegend Schneiden mit einem - bei Gebrauch des Fräswerkzeugs in einem bestimmungsgemäßen Drehsinn - drückendem Schnitt ausgebildet sind.

Mit "an den Schaftabschnitt angrenzt" ist gemeint, dass der erste axiale Schneidenbereich dem Schaftabschnitt benachbart ist. Es kann jedoch ein Übergang vom ersten axialen Schneidenbereich zum Schaftabschnitt bestehen, wo die Spiralnuten auslaufen.

Unter Schneiden mit drückendem Schnitt wird verstanden, dass die betreffenden Schneiden eine axiale Kraftkomponente auf ein Werkstück in Richtung einer Werkzeugspitze, d.h. in Richtung Stirnbereich, ausüben. Dazu sind bei einem rechtsdrehenden Werkzeug die Schneiden mittels Freiwinkel an jener Flanke eines Schneidelements angebracht, welche Flanke entlang einer Linksspirale liegt und in Richtung Werkzeugspitze weist. Diese Schneiden weisen einen negativen Rückspanwinkel auf.

Die Nuten der Linksspirale übernehmen somit im ersten axialen Schneidenbereich die Funktion einer Spannut. Die Nuten der Rechtsspirale übernehmen im ersten axialen Schneidenbereich die Funktion eines Spanteilers.

Der Schneidenabschnitt weist weiters einen zweiten axialen Schneidenbereich auf, der an den Stirnbereich angrenzt und in welchem an den diskreten Schneidelementen überwiegend Schneiden mit einem - bei Gebrauch des Fräswerkzeugs in einem bestimmungsgemäßen Drehsinn - ziehenden Schnitt ausgebildet sind. Unter Schneiden mit ziehendem Schnitt wird verstanden, dass die betreffenden Schneiden eine axiale Kraftkomponente auf ein Werkstück in Richtung Schaftbereich ausüben.

Dazu sind bei einem rechtsdrehenden Werkzeug die Schneiden mittels Freiwinkel an jener Flanke eines Schneidelements angebracht, welche Flanke entlang einer Rechtsspirale liegt und in Richtung Schaftbereich weist. Die Schneiden weisen einen positiven Rückspanwinkel auf.

Die Nuten der Rechtsspirale übernehmen somit im zweiten axialen Schneidenbereich die Funktion einer Spannut, die Nuten der Linksspirale übernehmen im zweiten axialen Schneidenbereich die Funktion eines Spanteilers.

Der Schneidenabschnitt weist weiters einen Übergangsbereich auf, der bezüglich der axialen Richtung zwischen dem ersten und dem zweiten Schneidenbereich ausgebildet ist, an welchem Übergangsbereich sowohl Schneiden mit ziehendem Schnitt als auch Schneiden mit drückendem Schnitt ausgebildet sind. Im Übergangsbereich besteht also entlang eines Flugkreises wenigstens eine Schneide mit positivem und wenigstens eine Schneide mit negativem Rückspanwinkel.

Die jeweiligen Decklagen eines mit dem erfindungsgemäßen Werkzeug bearbeiteten Werkstückes werden durch Druckkräfte beaufschlagt. Eine Delamination wird dadurch vermieden. Die Vielzahl von unterbrochenen Schneiden führt im Vergleich zu Kompressionsfräsern aus dem Stand der Technik zu verringerten Bearbeitungskräften.

Bevorzugt sind die Schneidelemente in Form von im Wesentlichen pyramidenstumpfförmigen Zähnen ausgebildet. Gemeint sind damit Zahnformen mit sich nach außen verjüngender Gestalt und viereckigen Deckflächen.

Bevorzugt weist eine Mehrzahl der Schneiden im ersten axialen Schneidenbereich einen negativen Rückspanwinkel auf. Damit überwiegen im ersten axialen Schneidenbereich Schneiden mit drückender Wirkung.

Bevorzugt weist eine Mehrzahl der Schneiden im zweiten axialen Schneidenbereich einen positiven Rückspanwinkel auf. Damit überwiegen im zweiten axialen Schneidenbereich Schneiden mit ziehender Wirkung.

Bevorzugt ist eine im Wesentlichen gleichbleibende Gestalt der Schneidelemente im ersten axialen Schneidenbereich und / oder im zweiten axialen Schneidenbereich über die im Wesentlichen gesamte axiale Erstreckung des jeweiligen Schneidenbereichs. Damit ist unter anderem der Vorteil verbunden, dass das Schneidwerkzeug über seine gesamte nutzbare Länge homogene Schneideigenschaften zeigt. Mit "im Wesentlichen" ist hier gemeint, dass geringe Abweichungen bestehen können, beispielsweise herstellungsbedingt im Auslauf des Schneidenabschnitts in den Schaftabschnitt.

Bevorzugt weisen die Spannuten eine über ihre jeweilige Erstreckung konstante Tiefe auf, abgesehen von dem Auslaufen der Spannuten in den Schaftabschnitt. Durch die konstante Tiefe der Spannuten kann die axiale Position des Übergangsbereiches variiert werden, ohne dass dadurch eine Schneidengeometrie im ersten oder zweiten Schneidenbereich verändert wird. Zudem werden durch die konstante Spannuttiefe an jeder Schneide identische Seitenspanwinkel erzielt.

Ein weiterer Vorteil von Spannuten konstanter Tiefe besteht in der einfachen Herstellung. Beim Schleifen eines Rohlings können die rechts- und linksweisenden Spannuten über den späteren Schneidenbereich mit konstanter Tiefe eingebracht werden. Ein Abheben der Schleifscheibe innerhalb des Schneidenbereichs ist nicht erforderlich.

Es kann vorgesehen sein, dass die Tiefe der rechts- und linksweisenden Spannuten gleich ist. Alternativ können die rechts- und linksweisenden Spannuten eine unterschiedliche Tiefe aufweisen.

Bevorzugt sind im Übergangsbereich ziehende und drückende Schneiden an separaten Schneidelementen ausgebildet.

In einer Variante könnten ziehende und drückende Schneiden an denselben Schneidelementen ausgebildet sein.

Bevorzugt ist vorgesehen, dass im Übergangsbereich Schneiden mit positivem Rückspanwinkel und negativem Rückspanwinkel bezüglich eines Flugkreises im Wechsel aufeinander folgen. Damit wird eine besonders günstige Schneidwirkung, insbesondere für Faserverbundwerkstoffe erzielt.

Bevorzugt sind die Spiralnuten mit Links- und Rechtsspirale im Kreuzschliff mit gleicher Tiefe in das Werkzeug eingebracht. Die Spiralnuten weisen bevorzugt einen Drallwinkel mit einem Betrag zwischen 10° und 40°, weiter bevorzugt zwischen 20° und 30° auf.

Bevorzugt sind die Spiralnuten jeweils gleichmäßig am Umfang verteilt. In anderen Worten haben die Spannuten einer Ausprägung - also rechtsweisende oder linksweisende Spiralnuten - bevorzugt jeweils den gleichen Abstand zueinander.

Die Anzahl der linksweisenden Spiralnuten unterscheidet sich bevorzugt von der Anzahl der rechtsweisenden Spiralnuten. Dadurch wird eine günstige Schneidenüberdeckung erzielt.

Die Anzahl und Breite der Spannuten folgt dem Auslegungskriterium, dass möglichst viele Zähne mit möglichst langen Schneidkanten angeboten werden bei gleichzeitig ausreichend großem Volumen von Spannuten zur Spanabfuhr. Die insgesamt angebotene Schneidenlänge korreliert direkt mit der Standzeit des Werkzeugs, da sich Schnittkraft und Verschleiß auf eine größere Schneidenlänge verteilen.

Es kann vorgesehen sein, dass sich die Längen der ziehenden und drückenden Schneiden unterscheiden. Beispielsweise kann es gewünscht sein, dass eine totale Länge von Schneiden der ziehenden oder der drückenden Charakteristik überwiegt. Dazu kann es vorgesehen sein, dass die Schneiden des jeweiligen Typs (also ziehend oder drückend) zwischen 1,0 und 2,0, bevorzugt 1,1 bis 1,5 mal länger sind als die Schneiden der jeweilig anderen Typs.

Günstig ist es, wenn der Übergangsbereich eine axiale Erstreckung aufweist, die bis 25 % der axialen Erstreckung des ersten axialen Schneidenbereichs und / oder bis 25 % der axialen Erstreckung des zweiten axialen Schneidenbereichs beträgt.

Der erste und der zweite axiale Schneidenbereich sind bevorzugt gleich lang. Ihre axiale Länge beträgt beispielsweise 50% des Werkzeugdurchmessers. Bevorzugt besitzt der Übergangsbereich eine geringere axiale Länge. Hierdurch ist die Bearbeitung sehr dünner Bauteile bei gleichzeitig hoher Schnittqualität beider Decklagen möglich.

Die axiale Erstreckung des Übergangsbereichs wird in der Regel vom Werkzeugdurchmesser abhängig gewählt. Der Werkzeugdurchmesser wird mit steigender Werkstückdicke größer, um Werkzeugbrüche zu vermeiden. Der Übergangsbereich darf bei dickeren Materialien größer sein. Ein günstiges Maß für die axiale Erstreckung des Übergangsbereichs liegt bei 5 - 20% des Werkzeugdurchmessers.

Die Schneideneingriffszahl entlang des Flugkreises des Übergangsbereichs liegt bevorzugt zwischen der des ersten und der des zweiten axialen Schneidenbereiches. Schneideneingriffszahl bedeutet die Anzahl an individuellen Schneiden, die gleichzeitig im Eingriff mit dem Werkstück sind. Zudem verteilen sich die Schneideneingriffe im Übergangsbereich bevorzugt auf einen größeren Winkelbereich als in den beiden anderen Schneidenbereichen, wodurch sich der effektive Zahnvorschub verringert und die Schneidenbelastung sinkt.

Bevorzugt besteht das Fräswerkzeug aus Hartmetall. Als Werkstoff in Frage kommen auch andere Hartstoffe wie etwa Keramik.

Die Herstellung eines erfindungsgemäßen Fräswerkzeugs erfolgt bevorzugt durch Schleifen, wobei in einen zylindrischen Rohling zunächst die links- und rechtsweisenden Spiralnuten eingebracht werden.

Durch die Teilung der Spannuten, d.h. deren umfängliche Abstände, und deren Breite wird die Gestalt der diskreten Schneidelemente ("Zähne") festgelegt. So können beispielsweise durch einen geringeren umfänglichen Abstand der rechtsweisenden Spiralnuten und / oder eine größere Breite der rechtsweisenden Spiralnuten im Vergleich zu den linksweisenden Spiralnuten Schneidelemente mit einer in einer Draufsicht auf die Deckfläche rhomboidförmigen Gestalt erzeugt werden.

Wie bereits ausgeführt, kann es gewünscht sein, dass die ziehenden und drückenden Schneiden ungleich lang sind. Im Folgenden wird beispielhaft beschrieben, dass bei rhomboidförmiger Deckfläche der Schneidelemente die langen Kanten des Rhomboids parallel zur rechtsweisenden Spiralnut verlaufen. Werden in dieser Konfiguration
- im zweiten axialen Schneidenbereich die in Richtung Schaftabschnitt weisenden langen Kanten durch eine Fase bzw. Aufbringen eines Freiwinkels zu wirksamen Schneiden gemacht, und
- im ersten axialen Schneidenbereich die in Richtung Stirnbereich weisenden kurzen Kanten durch eine Fase bzw. Aufbringen eines Freiwinkels zu wirksamen Schneiden gemacht,
weist das resultierende Fräswerkzeug bei einer Verwendung im bestimmungsgemäßem Drehsinn längere ziehend wirkende als drückend wirkende Schneiden auf.

Je nach Anwendung könnte das Muster auch umgekehrt werden, um beispielsweise eine totale Länge von drückenden Schneiden zu erhöhen. Weitere Vorteile und Zweckmäßigkeiten der Erfindung ergeben sich anhand der nachfolgenden Beschreibung von Ausführungsbeispielen unter Bezugnahme auf die beigefügten Figuren.

Die Figuren zeigen in:
- Fig. 1a, 1b: Ausführungsbeispiel eines Fräswerkzeugs in einer Seitenansicht,
- Fig. 1b: ein Detail daraus,
- Fig. 1c: eine perspektivische Ansicht davon
- Fig. 2: ein Schneidelement gemäß einem weiteren Ausführungsbeispiel eines Fräswerkzeugs
- Fig. 3a-3c: eine schematische Darstellung zur Herstellung des Fräswerkzeugs

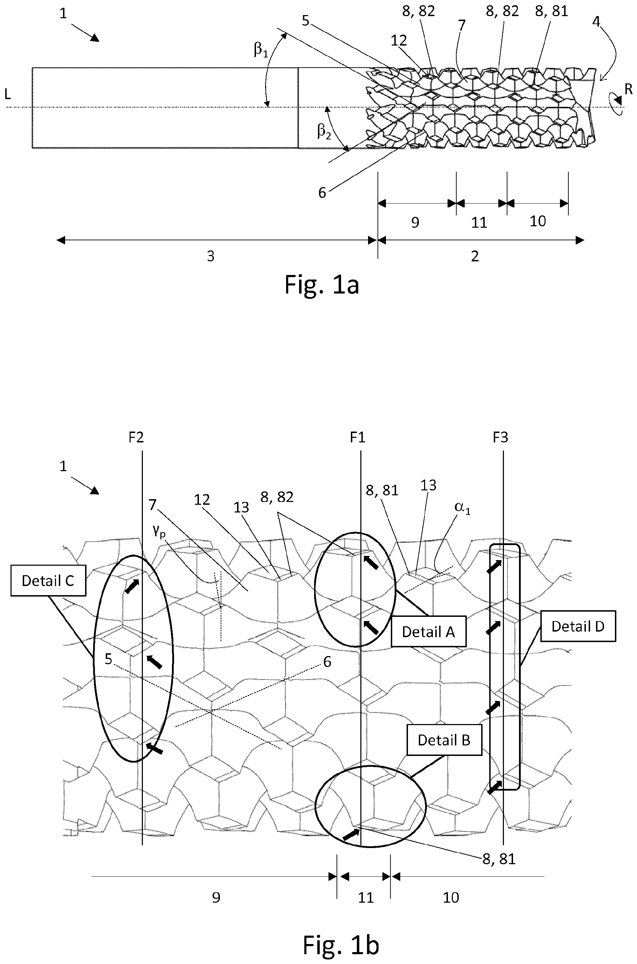

Figur 1a zeigt ein Fräswerkzeug 1 in einem ersten Ausführungsbeispiel in einer Seitenansicht. Das Fräswerkzeug 1 weist eine kreiszylindrische Grundgestalt mit einer Längsachse L auf, welche eine axiale Richtung festlegt, entlang welcher Längsachse L wenigstens ein Schneidenabschnitt 2 und ein Schaftabschnitt 3 sowie ein Stirnbereich 4 ausgebildet sind.

Der Stirnbereich 4 ist in diesem Beispiel schneidend ausgeführt, kann aber auch nicht-schneidend ausgeführt sein.

Das Fräswerkzeug 1 ist im vorliegenden Beispiel für eine rechtsdrehende Verwendung vorgesehen, wie mit dem Pfeil für Drehsinn R gezeigt. Auch die weiteren Beispiele zeigen rechtsdrehende Fräswerkzeuge. Die Erfindung ist auch für linksdrehende Werkzeuge anwendbar.

Das Fräswerkzeug 1 ist mit rechtsweisenden Spiralnuten 5 und linksweisenden Spiralnuten 6 versehen. Rechtsweisend bedeutet, dass die betreffende Spiralnut sich bei einer Betrachtung vom Schaftabschnitt 3 in Richtung Stirnbereich 4 entlang einer Rechtsspirale (d.h. im Uhrzeigersinn) erstreckt. Nach Konvention wird der Spiralwinkel (auch: Drallwinkel) β₁ der rechtsweisenden Spiralnuten positiv angegeben.

Die rechtsweisenden Spiralnuten 5 weisen einen Spiralwinkel (auch: Drallwinkel) β₁ auf. Die linksweisenden Spiralnuten 6 weisen einen Spiralwinkel β₂ auf. Der Betrag der Spiralwinkel (β₁, β₂) liegt zwischen 10° und 40°, weiter bevorzugt zwischen 20° und 30°.

Zwischen den sich kreuzenden Spiralnuten 5, 6 sind diskrete Schneidelemente 7 ("Zähne") ausgebildet. Im vorliegenden Ausführungsbeispiel haben die diskreten Schneidelemente 7 die Form von Pyramidenstümpfen mit einer Deckfläche 12 in Form eines Vierecks. In der vorliegenden bevorzugten Ausführungsform sind die die Deckfläche 12 begrenzenden Kanten nicht gleich lang. Vielmehr ist die Deckfläche 12 hier ein Parallelogramm mit zwei langen und zwei kurzen Kanten.

Der Schneidenabschnitt 2 ist unterteilt in einen ersten axialen Schneidenbereich 9, der an den Schaftabschnitt 3 angrenzt, einen zweiten axialen Schneidenbereich 10, der an den Stirnbereich 4 angrenzt, sowie einen Übergangsbereich 11, der bezüglich der axialen Richtung zwischen dem ersten 9 und dem zweiten 10 Schneidenbereich liegt.

Stirnseitig erstrecken sich gegebenenfalls Spanräume von Schneiden des Stirnbereichs 4 geringfügig in den Schneidenabschnitt 2. Der zweite axiale Schneidenbereich 10 erstreckt sich vom Übergangsbereich 11 bis hin zum Stirnbereich 4 bzw. zum Ende der gegebenenfalls vorhandenen Spanräume von Schneiden des Stirnbereichs 4.

Im ersten axialen Schneidenbereich 9 sind an den Schneidelementen 7 Schneiden 8, 82 an jener Kante eines Schneidelements 7 ausgebildet, welche von einer linksweisenden Spiralnut 6 gebildet ist und in Richtung Stirnbereich 4 des Fräswerkzeug 1 weist. In anderen Worten sind die Schneiden 8, 82 im ersten axialen Schneidenbereich 9 bei einer Verwendung des Fräswerkzeug 1 mit bestimmungsgemäßem Drehsinn R mit drückendem Schnitt ausgebildet. "Drückender Schnitt" bedeutet, dass die betreffenden Schneiden (8, 82) auf ein zu bearbeitendes Werkstück eine axiale Kraftkomponente in Richtung Stirnbereich 4 ausüben. Durch den Druck beispielsweise auf eine obere Decklage eines Werkstücks wird eine Delamination wirksam verhindert. Bevorzugt sind im ersten axialen Schneidenbereich 9 ausschließlich Schneiden 8, 82 mit drückendem Schnitt ausgebildet.

Im zweiten axialen Schneidenbereich 10 sind an den Schneidelementen 7 Schneiden 8, 81 an jener Kante eines Schneidelements 7 ausgebildet, welche von einer rechtsweisenden Spiralnut 5 gebildet ist und in Richtung Schaftbereich 3 weist.

In anderen Worten sind die Schneiden 8, 81 im zweiten axialen Schneidenbereich 10 bei einer Verwendung des Fräswerkzeug 1 mit bestimmungsgemäßem Drehsinn R mit ziehendem Schnitt ausgebildet. "Ziehender Schnitt" bedeutet, dass die betreffenden Schneiden (8, 81) auf ein zu bearbeitendes Werkstück eine axiale Kraftkomponente in Richtung Schaftbereich 3 ausüben. Durch den dadurch erzeugten Druck auf eine untere Decklage des Werkstücks wird eine Delamination wirksam verhindert. Bevorzugt sind im zweiten axialen Schneidenbereich 10 ausschließlich Schneiden 8, 81 mit ziehendem Schnitt ausgebildet.

Insgesamt erfährt das Werkstück durch das Zusammenwirken von Schneiden 8, 82 mit drückendem Schnitt am ersten axialen Schneidenbereich 9 und ziehenden Schneiden 8, 81 am zweiten axialen Schneidenbereich 10 eine Kompression.

Der Einfachheit halber wurde jene Seite des Werkstücks, welche in Richtung Schaftabschnitt 3 weist als "oben" und jene Seite des Werkstücks, welche in Richtung Stirnbereich 4 weist als "unten" bezeichnet. Natürlich kann eine Bearbeitung auch so erfolgen, dass das Fräswerkzeug 1 aufwärts oder schräg im Raum steht. Maßgeblich sind die Orientierungen hinsichtlich des Fräswerkzeugs 1.

An den Schneidelementen 7 können eine oder mehrere Schneiden 8, 81, 82 vorhanden sein. Im vorliegenden Ausführungsbeispiel ist an jedem Schneidelement 7 genau eine Schneide 8, 81, 82 ausgebildet. Der Übersichtlichkeit halber sind nur zwei Schneiden 81, 82 mit Bezugszeichen versehen.

Eine Schneide 8, 81, 82 ist dadurch bestimmt, dass an der betreffenden Kante an einer Deckfläche 12 des Schneidelements 7 durch Aufbringen einer Fase 13 ein definierter Span- und Freiwinkel vorliegt.

In diesem Ausführungsbeispiel sind die rechtsweisenden Spannuten 5 breiter ausgebildet als die linksweisenden Spannuten 6, sodass die Schneidelemente 7 einen von einem rautenförmigen Querschnitt abweichenden Querschnitt aufweisen. Es ist demnach vorgesehen, dass die Schneidelemente 7 einen rhomboidförmigen Querschnitt aufweisen, wodurch jene Kanten, welche parallel zu rechtsweisenden Spannuten 5 liegen, länger sind als jene, welche parallel zu linksweisenden Spannuten 6 liegen. Folglich sind die Schneiden 82 mit drückendem Schnitt kürzer als die Schneiden 81 mit ziehendem Schnitt.

In diesem Beispiel überwiegen die ziehenden Kraftkomponenten auf das Werkstück, was beispielsweise bei Anordnungen mit Kupfer-Mesh Decklagen an einer Unterseite des Werkstücks vorteilhaft sein kann. Wie bereits erwähnt, können die Verhältnisse durch entsprechende Form der Schneidelemente 7 auch umgekehrt werden oder es können die Schneiden 81, 82 gleich lang sein.

Ist ein Unterschied der Schneidenlängen vorgesehen, dann ist der eine Schneidentyp zwischen 1,1 bis 2 mal länger als der andere Typ.

Bei zu großem Unterschied entstehen ungewünschte Passivkräfte.

Bevorzugt weisen die rechtsweisenden und linksweisenden Spannuten 5, 6 die gleiche Tiefe auf.

Die Anzahl der linksweisenden Spannuten 6 unterscheidet sich von der Anzahl der rechtsweisenden Spannuten 5. Dies ist vorteilhaft für eine günstige Schneidenüberdeckung.

Im Übergangsbereich 11, der bezüglich der axialen Richtung zwischen dem ersten 9 und dem zweiten 10 Schneidenbereich liegt, liegt sowohl wenigstens eine Schneide 81 mit ziehendem Schnitt als auch wenigstens eine Schneide 82 mit drückendem Schnitt vor.

Die jeweiligen Schneiden 81, 82 sind im vorliegenden Ausführungsbeispiel an separaten Schneidelementen 7 ausgebildet.

Günstig ist es, wenn entlang eines Flugkreises im Übergangsbereich 11 Schneiden 81 mit ziehendem Schnitt und Schneiden 82 mit drückendem Schnitt abwechselnd aufeinanderfolgen.

Die Spannuten 5, 6 weisen bevorzugt eine konstante Tiefe auf. Hierdurch kann die axiale Position des Übergangsbereiches 11 variiert werden, ohne dass sich eine Schneidengeometrie des ersten 9 oder zweiten 10 axialen Schneidenbereiches verändert. Zudem werden durch die konstante Spannuttiefe identische Beträge eines Seitenspanwinkels an jeder Schneide 8 erzielt.

Der Übergangsbereich 11 weist bevorzugt eine geringe axiale Länge auf. Beispielsweise beträgt die Länge des Übergangsbereichs 11 zwischen 10 -30% des Werkzeugdurchmessers.

Der Übergangsbereich 11 kann auch noch schmäler ausgebildet sein, sodass er sich lediglich über einen axialen Bereich erstreckt, der im Wesentlichen einer Breite von einem Schneidelement 7 entspricht. Durch eine geringe axiale Erstreckung des Übergangsbereichs 11 ist die Bearbeitung sehr dünner Bauteile bei gleichzeitig hoher Schnittqualität beider Decklagen möglich.

Figur 1b zeigt einen Ausschnitt der Darstellung Figur 1a, wobei der erste 9 und der zweite 10 Schneidenbereich in Teilen zu sehen sind. Zwischen dem ersten 9 und dem zweiten 10 Schneidenbereich liegt der Übergangsbereich 11. Das Fräswerkzeug 1 weist eine Vielzahl von diskreten Schneidelementen 7 ("Zähnen") auf. Eine Deckfläche 12 eines Schneidelements 7 ist von vier Kanten begrenzt, von welchen an einer Kante durch Anbringen einer Fase 13 eine Schneide 8, 81, 82 mit definiertem Seitenfreiwinkel ausgebildet sein kann. Die Deckfläche 12 folgt in diesem Ausführungsbeispiel im Wesentlichen der Außenkontur eines zylindrischen Stab-Rohlings als Ausgangsprodukt des vorliegenden Fräswerkzeugs 1. Damit soll zum Ausdruck gebracht werden, dass in diesem Ausführungsbeispiel die Deckflächen bis auf das Aufbringen der Fase 13 bevorzugt keinen separaten Schliff erhalten. Somit ist keine gesonderte Schleifoperation erforderlich. Eine Fase 13 mit einem ersten Seitenfreiwinkel α₁ ist exemplarisch an einer Schneide 81 mit ziehendem Schnitt dargestellt. Der erste Freiwinkel α₁ wird bewusst klein - bevorzugt ist ein Bereich zwischen 3° - 6° - gewählt, um einen großen Keilwinkel und somit eine stabile Schneidkante zu erhalten.

Weiters hervorgehoben ist der Verlauf einer rechtsweisenden Spannut 5 und einer linksweisenden Spannut 6.

Weiters hervorgehoben sind für jeden der drei axialen Schneidebereiche 9, 10, 11 jene Schneiden, welche sich bezüglich eines exemplarischen Flugkreises im Eingriff befinden. Diese Schneiden haben einen Schnittpunkt mit dem jeweiligen Flugkreis. Die Schnittpunkte sind über Blockpfeile gekennzeichnet.

Im Übergangsbereich 11 liegen entlang eines Flugkreises F1 sowohl Schneiden 81 mit ziehendem Schnitt als auch Schneiden 82 mit drückendem Schnitt vor. Diese Situation ist durch die Details A und B hervorgehoben: entlang des Flugkreises F1 sind in der vorliegenden Ansicht von etwa 180° des Umfangs des Fräswerkzeugs 1 genau zwei drückende Schneiden 82 (Detail A) und eine ziehende Schneide 81 (Detail B) ausgebildet. Im Übergangsbereich 11 liegen in diesem Ausführungsbeispiel in einem Winkelbereich von 174 Grad Schneiden auf einem Flugkreis. Die 174 Grad ergeben sich aus dem Schnittpunkt des Flugkreises F1 mit der in der Figur oben gezeigten Schneide 82 (Detail A) und dem Schnittpunkt des Flugkreises F1 mit der in der Figur unten gezeigten Schneide 81 (Detail B). Als im Eingriff befindliche Schneiden werden also jene gezählt, die einen Schnittpunkt mit einem Flugkreis aufweisen. Auf dem zu 360 Grad verbleibenden Umfang liegen auf diesem Flugkreis F1 keine weiteren Schneiden.

Im ersten axialen Schneidenbereich 9 liegen in diesem Ausführungsbeispiel auf einem Flugkreis F2 zwischen einer ersten und einer letzten Schneide 72 Grad, wie anhand Detail C und Flugkreis F2 illustriert. Entlang des Flugkreises F2 sind drei drückende Schneiden 82 im Eingriff.

Im zweiten axialen Schneidenbereich 10 liegen in diesem Ausführungsbeispiel auf einem Flugkreis F3 vier ziehend wirkende Schneiden in einem Winkelbereich von 92 Grad im Eingriff, siehe Detail D.

Ferner ist exemplarisch an einem Schneidelement 7 der Rückspanwinkel γₚ eingetragen. Zur Definition des Rückspanwinkels sei auch auf die DIN6581 (Bezugssysteme und Winkel am Schneidteil des Werkzeuges) verwiesen.

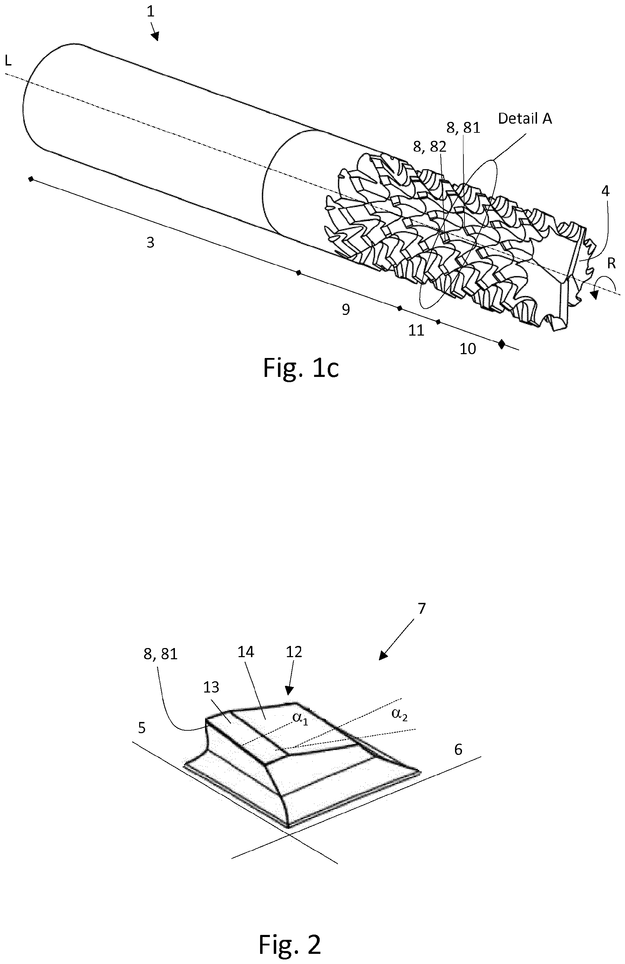

Figur 1c zeigt das Fräswerkzeug 1 im Ausführungsbeispiel der Figuren 1a und 1b in einer perspektivischen Ansicht. Im Detail A ist der Übergangsbereich 11 hervorgehoben, in welchem sowohl Schneiden 8, 81 mit ziehendem Schnitt als auch Schneiden 8, 82 mit drückendem Schnitt vorliegen.

Figur 2 zeigt ein Schneidelement 7 gemäß einem weiteren Ausführungsbeispiel eines Fräswerkzeugs 1 im Detail. In diesem Beispiel ist an der Deckfläche 12 des Schneidelements 7 eine Fase 13 (entsprechend einer ersten Freifläche) mit einem erstem Seitenfreiwinkel α₁ sowie eine zweite Freifläche 14 mit einem zweiten Seitenfreiwinkel α₂ ausgebildet. Der erste Seitenfreiwinkel α₁ = 3° - 6° wird bewusst klein gewählt, um einen großen Keilwinkel und somit eine stabile Schneidkante zu erhalten. Die Breite der Fase 13 sollte sehr klein sein (zum Beispiel 0,1 - 0,3 mm), da kohlenstofffaserverstärkte Kunststoffe (CFK) bei der Zerspanung stark einfedern und zum Drücken auf die Freifläche neigen. Aus diesem Grund gibt es einen deutlich größeren zweiten Seitenfreiwinkel α₂ = 12° bis 25°, damit das Rückfedern des Werkstoffes zu keinem Drücken auf die übrige Deckfläche 12 führt.

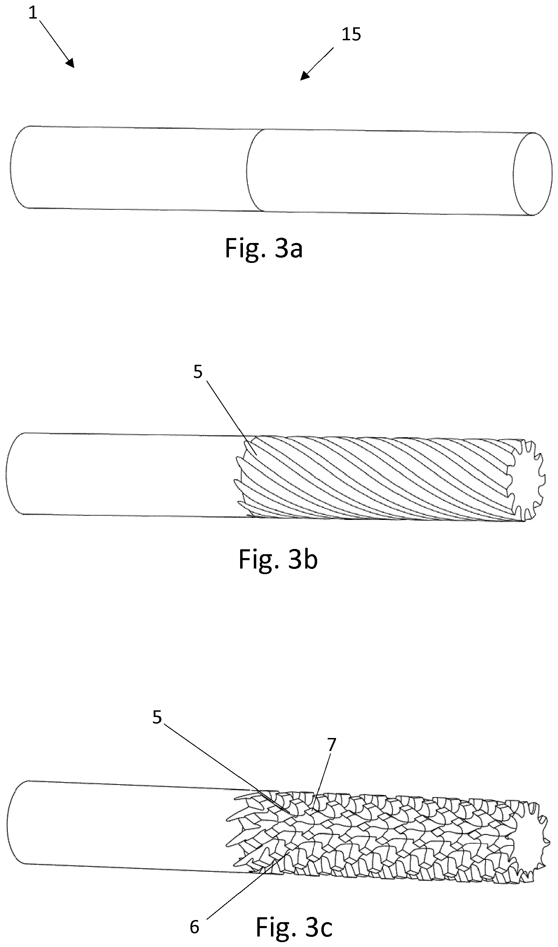

Figuren 3a-3c zeigen schematisch die Stufen einer Herstellung eines erfindungsgemäßen Fräswerkzeugs 1.

Dargestellt ist die Herstellungsroute über Schleifen ausgehend von einem Rohling 15, Figur 3a. Der kreiszylinderförmige Rohling 15 besteht aus Hartmetall oder einem anderen Hartstoff.

In einem ersten Schritt, Figur 3b, werden Spiralnuten, im vorliegenden Beispiel elf rechtsweisende Spiralnuten 5 durch Schleifen mit einer Schleifscheibe eingebracht.

In einem zweiten Schritt, Figur 3c, werden gegenläufige Spiralnuten, hier zehn linksweisende Spiralnuten 6 eingebracht.

Bereits nach diesem Schritt weist das Fräswerkzeug 1 die diskreten Schneidelemente 7 auf, welche als Zähne zwischen den Spiralnuten 5, 6 stehenbleiben.

Die Spiralnuten 5, 6 sind bevorzugt über ihre jeweilige Erstreckung konstant tief, abgesehen natürlich von dem Auslaufen der Spiralnuten 5, 6 in den Schaftbereich. Die mit diesem Merkmal verbundenen Vorteile sind zum einen die leichte Herstellbarkeit, zum anderen die gleichbleibende Form der Schneidelemente 7 über den Schneidenabschnitt 2. Letzteres bewirkt ein homogenes Schneidverhalten des Fräswerkzeugs 1 über seine gesamte nutzbare Länge.

In einem letzten Schritt, werden auf Kanten der Schneidelemente 7 definierte Freiwinkel aufgebracht, siehe dazu etwa Figur 1c. Durch Aufbringen eines Freiwinkels, wenigstens in Form einer Fase 13, wird die jeweilige Kante des Schneidelements 7 zur wirksamen Schneide. Darin liegt ein weiterer besonderer Vorteil der vorliegenden Erfindung: erst in diesem Schritt erfolgt die Festlegung der Schneidenbelegung, d.h. auch der jeweiligen Ausdehnung des ersten axialen Schneidenbereichs 9, des zweiten axialen Schneidenbereichs 10 und des Übergangsbereichs 11. Das begünstigt eine wirtschaftliche Darstellung von Varianten, die beispielsweise auf verschiedene Materialstärken angepasst sein können.

Optional erfolgt danach eine Hartstoffbeschichtung des Fräswerkzeugs 1, vorzugsweise mit einer Diamantbeschichtung. Dieses bietet den Vorteil, dass die Schneidengeometrie auch in einem stark abrasiv wirkenden Werkstoff lange erhalten bleibt.

### Liste der verwendeten Bezugszeichen:

- 1: Fräswerkzeug
- 2: Schneidenabschnitt
- 3: Schaftabschnitt
- 4: Stirnbereich
- 5: rechtsweisende Spiralnut
- 6: linksweisende Spiralnut
- 7: diskretes Schneidelement
- 8: Schneide
- 81: Schneide an rechtsweisender Spiralnut
- 82: Schneide an linksweisender Spiralnut
- 9: erster axialer Schneidenbereich
- 10: zweiter axialer Schneidenbereich
- 11: Übergangsbereich
- 12: Deckfläche
- 13: Fase (erste Freifläche)
- 14: zweite Freifläche
- 15: Rohling

- F: Flugkreis
- L: Längsachse
- R: Drehsinn
- α: Seitenfreiwinkel
- β: Drallwinkel
- γ: Rückspanwinkel

## Patentansprüche

1. Fräswerkzeug (1) mit im Wesentlichen gerader kreiszylindrischer Grundform mit einer Längsachse (L), welche eine axiale Richtung festlegt, entlang welcher Längsachse (L) wenigstens ein Schneidenabschnitt (2) und ein Schaftabschnitt (3) sowie ein Stirnbereich (4) ausgebildet ist, wobei das Fräswerkzeug (1) rechtsweisende Spiralnuten (5) und linksweisende Spiralnuten (6) aufweist, und wobei zwischen den sich kreuzenden Spiralnuten (5, 6) diskrete Schneidelemente (7) ausgebildet sind, an welchen Schneidelementen (7) eine oder mehrere Schneiden (8) ausgebildet sind, **dadurch gekennzeichnet, dass** der Schneidenabschnitt (2) wenigstens aufweist:
- einen ersten axialen Schneidenbereich (9), der an den Schaftabschnitt (3) angrenzt, wobei an den diskreten Schneidelementen (7) in dem ersten axialen Schneidenbereich (9) überwiegend Schneiden (8, 82) mit einem - bei Gebrauch des Fräswerkzeugs (1) in einem bestimmungsgemäßen Drehsinn (R) - drückendem Schnitt ausgebildet sind,
- weiters einen zweiten axialen Schneidenbereich (10), der an den Stirnbereich (4) angrenzt und in welchem an den diskreten Schneidelementen (7) überwiegend Schneiden (8, 81) mit einem - bei Gebrauch des Fräswerkzeugs (1) in einem bestimmungsgemäßen Drehsinn (R) - ziehendem Schnitt ausgebildet sind,
- weiters einen Übergangsbereich (11), der bezüglich der axialen Richtung zwischen dem ersten (9) und dem zweiten (10) Schneidenbereich ausgebildet ist, an welchem Übergangsbereich (11) sowohl Schneiden (8, 81) mit vorwiegend ziehendem Schnitt als auch Schneiden (8, 82) mit vorwiegend drückendem Schnitt ausgebildet sind.

2. Fräswerkzeug (1) nach Anspruch 1, wobei die Schneidelemente (7) in Form von im Wesentlichen pyramidenstumpfförmigen Zähnen ausgebildet sind.

3. Fräswerkzeug (1) nach Anspruch 1 oder 2, wobei eine Mehrzahl der Schneiden (8, 82) im ersten axialen Schneidenbereich (9) einen negativen Rückspanwinkel (γₚ) aufweist.

4. Fräswerkzeug (1) nach einem der vorangegangenen Ansprüche, wobei eine Mehrzahl der Schneiden (8, 81) im zweiten axialen Schneidenbereich (10) einen positiven Rückspanwinkel (γₚ) aufweist.

5. Fräswerkzeug (1) nach einem der vorangegangenen Ansprüche, wobei eine Gestalt der Schneidelemente (7) im ersten axialen Schneidenbereich (9) und / oder im zweiten axialen Schneidenbereich (10) über die im Wesentlichen gesamte axiale Erstreckung des jeweiligen Schneidenbereichs (9, 10) im Wesentlichen gleichbleibend ist.

6. Fräswerkzeug (1) nach einem der vorangegangenen Ansprüche, wobei eine Tiefe der rechtsweisenden Spiralnuten (5) und / oder der linksweisenden Spiralnuten (6) über die axiale Erstreckung des Schneidenabschnitts (2) im Wesentlichen konstant ist.

7. Fräswerkzeug (1) nach einem der vorangegangenen Ansprüche, wobei im Übergangsbereich (11) ziehende und drückende Schneiden (81, 82) an separaten Schneidelementen (7) ausgebildet sind.

8. Fräswerkzeug (1) nach einem der Ansprüche 1 bis 6, wobei im Übergangsbereich (11) ziehende und drückende Schneiden (81, 82) an denselben Schneidelementen (7) ausgebildet sind.

9. Fräswerkzeug (1) nach einem der vorangegangenen Ansprüche, wobei im Übergangsbereich (11) Schneiden mit positivem Rückspanwinkel (γₚ) und negativem Rückspanwinkel (γₚ) bezüglich eines Flugkreises (F) im Wechsel aufeinander folgen.

10. Fräswerkzeug (1) nach einem der vorangegangenen Ansprüche, wobei die Spiralnuten (5, 6) einen Drallwinkel (β₁, β₂) zwischen 10° und 40° aufweisen.

11. Fräswerkzeug (1) nach einem der vorangegangenen Ansprüche, wobei die Spiralnuten (5, 6) bezüglich einer Umfangsrichtung des Fräswerkzeugs (1) jeweils gleichmäßig beabstandet sind.

12. Fräswerkzeug (1) nach einem der vorangegangenen Ansprüche, wobei die rechtsweisenden Spiralnuten (5) breiter oder schmäler ausgebildet sind als die linksweisenden Spiralnuten (6).

13. Fräswerkzeug (1) nach einem der vorangegangenen Ansprüche, wobei die Schneiden (81) mit ziehendem Schnitt ungleich lang sind wie die Schneiden (82) mit drückendem Schnitt.

14. Fräswerkzeug (1) nach einem der vorangegangenen Ansprüche, wobei der Übergangsbereich (11) eine axiale Erstreckung aufweist, die bis 25% der axialen Erstreckung des ersten axialen Schneidenbereichs (9) und / oder bis 25% der axialen Erstreckung des zweiten axialen Schneidenbereichs (10) beträgt.

15. Fräswerkzeug (1) nach einem der vorangegangenen Ansprüche, wobei ein Schneideneingriff von Schneiden (8, 81, 82) des Übergangsbereichs (11) sich über einen größeren umfänglichen Winkelbereich erstreckt als ein Schneideneingriff von Schneiden (8, 81, 82) des ersten axialen Schneidenbereichs (9) und des zweiten axialen Schneidenbereichs (10).

16. Fräswerkzeug (1) nach einem der vorangegangenen Ansprüche, wobei eine Schneideneingriffszahl des Übergangsbereichs (11) entlang eines Flugkreises (F) zwischen der Schneideneingriffszahl des ersten Schneidenbereichs (9) und der Schneideneingriffszahl des zweiten axialen Schneidenbereichs (10) liegt.

17. Fräswerkzeug (1) nach einem der vorangegangenen Ansprüche, wobei an den Schneiden (81, 82) eine Fase (13) ausbildet ist, welche einen ersten Seitenfreiwinkel (α₁) zwischen 3° und 6° aufweist.

18. Fräswerkzeug (1) nach einem der vorangegangenen Ansprüche, wobei an Schneidelementen (7) eine zweite Freifläche (15) ausbildet ist, welche einen zweiten Seitenfreiwinkel (α₂) zwischen 12° und 25° aufweist.

19. Fräswerkzeug (1) nach einem der vorangegangenen Ansprüche, wobei Schneidelemente (7) an einer Spanfläche konkav und an einer der Spanfläche gegenüberliegenden Flanke konvex ausgebildet sind.

20. Verfahren zur Herstellung eines Fräswerkzeugs (1) nach einem der vorangegangenen Ansprüche umfassend die Schritte:
- Bereitstellen eines im Wesentlichen kreiszylinderförmigen Rohlings (15) aus Hartmetall oder einem anderen Hartstoff,
- Einbringen von Spiralnuten (5, 6) über einen späteren Schneidenbereich (2), wobei die Spiralnuten (5, 6) kreuzweise zueinander verlaufen und über ihre jeweilige Länge eine im Wesentlichen konstante Tiefe aufweisen,
- das Einbringen der Spiralnuten (5, 6) erfolgt solchermaßen, dass zwischen den gegenläufigen Spiralnuten (5, 6) diskrete Schneidelemente (7) stehenbleiben,
- Aufbringen von wenigstens einer Fase (13) und optional einer zweiten Freifläche (14) auf die Schneidelemente (7), wodurch Schneiden (8, 81, 82) hinsichtlich Orientierung und Verteilung über das Fräswerkzeug (1) festgelegt werden,
- optional anschließende Beschichtung als Verschleißschutz, vorzugsweise mit einer Diamantbeschichtung.

## Claims

1. Milling tool (1) having a substantially right circular-cylindrical base shape with a longitudinal axis (L) which defines an axial direction, along which longitudinal axis (L) at least one cutter portion (2) and a shank portion (3) and also an end region (4) are formed, wherein the milling tool (1) has right-hand spiral flutes (5) and left-hand spiral flutes (6), and wherein discrete cutting elements (7) are formed between the intersecting spiral flutes (5, 6), on which cutting elements (7) one or more cutting edges (8) are formed, **characterized in that** the cutter portion (2) at least has:
- a first axial cutter region (9) which adjoins the shank portion (3), wherein predominantly cutting edges (8, 82) having a pushing cut - when the milling tool (1) is used in an intended direction of rotation (R) - are formed on the discrete cutting elements (7) in the first axial cutter region (9),
- furthermore a second axial cutter region (10) which adjoins the end region (4) and in which predominantly cutting edges (8, 81) having a pulling cut - when the milling tool (1) is used in an intended direction of rotation (R) - are formed on the discrete cutting elements (7),
- furthermore a transition region (11) which is formed between the first (9) and the second (10) cutter region with respect to the axial direction, on which transition region (11) there are formed both cutting edges (8, 81) having predominantly a pulling cut and cutting edges (8, 82) having predominantly a pushing cut.

2. Milling tool (1) according to Claim 1, wherein the cutting elements (7) take the form of substantially truncated pyramid-shaped teeth.

3. Milling tool (1) according to Claim 1 or 2, wherein a plurality of the cutting edges (8, 82) in the first axial cutter region (9) have a negative rear rake angle (γₚ).

4. Milling tool (1) according to one of the preceding claims, wherein a plurality of the cutting edges (8, 81) in the second axial cutter region (10) have a positive rear rake angle (γₚ).

5. Milling tool (1) according to one of the preceding claims, wherein a configuration of the cutting elements (7) in the first axial cutter region (9) and/or in the second axial cutter region (10) is substantially uniform over the substantially entire axial extent of the respective cutter region (9, 10) .

6. Milling tool (1) according to one of the preceding claims, wherein a depth of the right-hand spiral flutes (5) and/or of the left-hand spiral flutes (6) is substantially constant over the axial extent of the cutter portion (2).

7. Milling tool (1) according to one of the preceding claims, wherein, in the transition region (11), pulling and pushing cutting edges (81, 82) are formed on separate cutting elements (7).

8. Milling tool (1) according to one of Claims 1 to 6, wherein, in the transition region (11), pulling and pushing cutting edges (81, 82) are formed on the same cutting elements (7).

9. Milling tool (1) according to one of the preceding claims, wherein, in the transition region (11), cutting edges having a positive rear rake angle (γₚ) and a negative rear rake angle (γₚ) follow one another in alternating fashion with respect to a pitch circle (F).

10. Milling tool (1) according to one of the preceding claims, wherein the spiral flutes (5, 6) have a twist angle (β₁, β₂) of between 10° and 40°.

11. Milling tool (1) according to one of the preceding claims, wherein the spiral flutes (5, 6) are each uniformly spaced apart with respect to a circumferential direction of the milling tool (1).

12. Milling tool (1) according to one of the preceding claims, wherein the right-hand spiral flutes (5) are designed to be wider or narrower than the left-hand spiral flutes (6).

13. Milling tool (1) according to one of the preceding claims, wherein the cutting edges (81) having a pulling cut are unequal in length to the cutting edges (82) having a pushing cut.

14. Milling tool (1) according to one of the preceding claims, wherein the transition region (11) has an axial extent which is up to 25% of the axial extent of the first axial cutter region (9) and/or up to 25% of the axial extent of the second axial cutter region (10).

15. Milling tool (1) according to one of the preceding claims, wherein a cutting-edge engagement of cutting edges (8, 81, 82) of the transition region (11) extends over a larger circumferential angular range than a cutting-edge engagement of cutting edges (8, 81, 82) of the first axial cutter region (9) and of the second axial cutter region (10).

16. Milling tool (1) according to one of the preceding claims, wherein a cutting-edge engagement number of the transition region (11) along a pitch circle (F) lies between the cutting-edge engagement number of the first cutter region (9) and the cutting-edge engagement number of the second axial cutter region (10) .

17. Milling tool (1) according to one of the preceding claims, wherein a bevel (13), which has a first side clearance angle (α₁) of between 3° and 6°, is formed on the cutting edges (81, 82).

18. Milling tool (1) according to one of the preceding claims, wherein a second flank (15), which has a second side clearance angle (α₂) of between 12° and 25°, is formed on cutting elements (7).

19. Milling tool (1) according to one of the preceding claims, wherein cutting elements (7) are designed to be concave on a rake face and convex on a flank opposite the rake face.

20. Method for producing a milling tool (1) according to one of the preceding claims, comprising the following steps:
- providing a substantially circular-cylindrical blank (15) made of hard metal or some other hard material,
- incorporating spiral flutes (5, 6) over a subsequent cutter region (2), wherein the spiral flutes (5, 6) run crosswise with respect to one another and have a substantially constant depth over their respective length,
- the spiral flutes (5, 6) are incorporated in such a way that discrete cutting elements (7) remain between the oppositely running spiral flutes (5, 6),
- applying at least one bevel (13) and optionally a second flank (14) to the cutting elements (7), with the result that cutting edges (8, 81, 82) are defined in terms of orientation and distribution over the milling tool (1),
- optionally subsequently coating as wear protection, preferably with a diamond coating.

## Revendications

1. Outil de fraisage (1) présentant une forme de base sensiblement cylindrique circulaire droite présentant un axe longitudinal (L), lequel définit une direction axiale, axe longitudinal (L) le long duquel au moins une partie de coupe (2) et une partie de tige (3) ainsi qu'une région frontale (4) sont réalisées, l'outil de fraisage (1) présentant des rainures en spirale (5) orientées vers la droite et des rainures en spirale (6) orientées vers la gauche, des éléments de coupe (7) distincts étant réalisés entre les rainures en spirale (5, 6) se croisant, éléments de coupe (7) sur lesquels sont réalisés un ou plusieurs tranchants (8), **caractérisé en ce que** la partie de coupe (2) présente au moins :
- une première région de coupe (9) axiale, qui est adjacente à la partie de tige (3), des tranchants (8, 82) présentant, lors de l'utilisation de l'outil de fraisage (1) dans un sens de rotation correct (R), une coupe en compression étant réalisés majoritairement sur les éléments de coupe (7) distincts dans la première région de coupe (9) axiale,
- en outre une deuxième région de coupe (10) axiale, qui est adjacente à la région frontale (4) et dans laquelle des tranchants (8, 81) présentant, lors de l'utilisation de l'outil de fraisage (1) dans un sens de rotation correct (R), une coupe en traction sont réalisés majoritairement sur les éléments de coupe (7) distincts,
- en outre une région de transition (11), qui est réalisée entre la première (9) et la deuxième (10) région de coupe par rapport à la direction axiale, région de transition (11) sur laquelle à la fois des tranchants (8, 81) présentant une coupe principalement en traction et des tranchants (8, 82) présentant une coupe principalement en compression sont réalisés.

2. Outil de fraisage (1) selon la revendication 1, les éléments de coupe (7) étant réalisés sous la forme de dents sensiblement en forme de pyramides tronquées.

3. Outil de fraisage (1) selon la revendication 1 ou 2, une pluralité de tranchants (8, 82) dans la première région de coupe (9) axiale présentant un angle de coupe vers l'arrière négatif (γₚ).

4. Outil de fraisage (1) selon l'une des revendications précédentes, une pluralité de tranchants (8, 81) dans la deuxième région de coupe (10) axiale présentant un angle de coupe vers l'arrière positif (γₚ).

5. Outil de fraisage (1) selon l'une des revendications précédentes, une configuration des éléments de coupe (7) dans la première région de coupe (9) axiale et/ou dans la deuxième région de coupe (10) axiale étant sensiblement invariable sur sensiblement toute l'étendue axiale de la région de coupe (9, 10) respective.

6. Outil de fraisage (1) selon l'une des revendications précédentes, une profondeur des rainures en spirale (5) orientées vers la droite et/ou des rainures en spirale (6) orientées vers la gauche étant sensiblement constante sur l'étendue axiale de la partie de coupe (2).

7. Outil de fraisage (1) selon l'une des revendications précédentes, des tranchants de traction et de compression (81, 82) étant réalisés sur des éléments de coupe (7) séparés dans la région de transition (11).

8. Outil de fraisage (1) selon l'une des revendications 1 à 6, des tranchants de traction et de compression (81, 82) étant réalisés sur les mêmes éléments de coupe (7) dans la région de transition (11).

9. Outil de fraisage (1) selon l'une des revendications précédentes, des tranchants présentant un angle de coupe vers l'arrière positif (γₚ) et des tranchants présentant un angle de coupe vers l'arrière négatif (γₚ) se succédant en alternance par rapport à un cercle de coupe (F) dans la région de transition (11).

10. Outil de fraisage (1) selon l'une des revendications précédentes, les rainures en spirale (5, 6) présentant un angle d'inclinaison (β₁, β₂) compris entre 10° et 40°.

11. Outil de fraisage (1) selon l'une des revendications précédentes, les rainures en spirale (5, 6) étant espacées respectivement uniformément par rapport à une direction périphérique de l'outil de fraisage (1).

12. Outil de fraisage (1) selon l'une des revendications précédentes, les rainures en spirale (5) orientées vers la droite étant réalisées de manière plus large ou plus étroite que les rainures en spirale (6) orientées vers la gauche.

13. Outil de fraisage (1) selon l'une des revendications précédentes, les tranchants (81) présentant une coupe en traction n'étant pas de même longueur que les tranchants (82) présentant une coupe en compression.

14. Outil de fraisage (1) selon l'une des revendications précédentes, la région de transition (11) présentant une étendue axiale qui vaut jusqu'à 25% de l'étendue axiale de la première région de coupe (9) axiale et/ou jusqu'à 25% de l'étendue axiale de la deuxième région de coupe (10) axiale.

15. Outil de fraisage (1) selon l'une des revendications précédentes, une entrée en prise de tranchants (8, 81, 82) de la région de transition (11) s'étendant sur une plus grande plage angulaire périphérique qu'une entrée en prise de tranchants (8, 81, 82) de la première région de coupe (9) axiale et de la deuxième région de coupe (10) axiale.

16. Outil de fraisage (1) selon l'une des revendications précédentes, un nombre d'entrées en prise de tranchants de la région de transition (11) le long d'un cercle de coupe (F) se situant entre le nombre d'entrées en prise de tranchants de la première région de coupe (9) et le nombre d'entrées en prise de tranchants de la deuxième région de coupe (10) axiale.

17. Outil de fraisage (1) selon l'une des revendications précédentes, un chanfrein (13) étant réalisé sur les tranchants (81, 82), lequel présente un premier angle de dépouille latéral (α₁) compris entre 3° et 6°.

18. Outil de fraisage (1) selon l'une des revendications précédentes, une deuxième face de dépouille (15) étant réalisée sur les éléments de coupe (7), laquelle présente un deuxième angle de dépouille latéral (α₂) compris entre 12° et 25°.

19. Outil de fraisage (1) selon l'une des revendications précédentes, des éléments de coupe (7) étant réalisés de manière concave sur une face de coupe et de manière convexe sur un flanc opposé à la face de coupe.

20. Procédé de fabrication d'un outil de fraisage (1) selon l'une des revendications précédentes, comportant les étapes suivantes :
- fourniture d'une ébauche (15) sensiblement de forme circulaire cylindrique en métal dur ou une autre matière dure,
- introduction de rainures en spirale (5, 6) sur une région de coupe ultérieure (2), les rainures en spirale (5, 6) s'étendant de manière croisée les unes par rapport aux autres et présentant une profondeur sensiblement constante sur leur longueur respective,
- l'introduction des rainures en spirale (5, 6) s'effectue de telle sorte que des éléments de coupe (7) distincts demeurent entre les rainures en spirale (5, 6) de sens opposés,
- application d'au moins un chanfrein (13) et éventuellement d'une deuxième face de dépouille (14) sur les éléments de coupe (7), de sorte que les tranchants (8, 81, 82) soient définis en termes de leur orientation et de leur répartition sur l'outil de fraisage (1),
- éventuellement revêtement ultérieur comme protection contre l'usure, de préférence avec un revêtement en diamant.
